# EUROPEAN PATENT APPLICATION

(11) **EP 3 012 947 A2**
(43) Date of publication of application: **27.04.2016**
(21) Application number: 15189298.1
(22) Date of filing: 12.10.2015
(51) Int. Cl.: H02K 15/03, H02K 1/27

(54) **METHOD FOR MANUFACTURING AN INTERIOR PERMANENT MAGNET ROTOR UNIT AND MAGNETIZING DEVICE**

(30) Priority: 20.10.2014 JP 2014213701
(71) Applicant: JTEKT CORPORATION, Osaka-shi Osaka 542-8502 (JP)
(72) Inventor: YAMAGUCHI, Ryosuke, Osaka-shi,, Osaka 542-8502 (JP); OONO, Yoshihiro, Osaka-shi,, Osaka 542-8502 (JP); KANDA, Naotake, Osaka-shi,, Osaka 542-8502 (JP); SHIBATA, Yoshiyuki, Osaka-shi,, Osaka 542-8502 (JP)
(74) Representative: Winter, Brandl, Fürniss, Hübner, Röss, Kaiser, Polte - Partnerschaft mbB

(57) **Abstract**

Provided are a method for manufacturing an interior permanent magnet rotor unit and a magnetizing device which can improve performance of a motor. A radial magnetizing part 30 including permanent magnets 32 is disposed so as to face a rotor unit 20 in a radial direction of the rotor unit 20. Axial magnetizing parts 40, 50 are disposed on both end faces in an axial direction Da of the rotor unit 20. The axial magnetizing parts 40, 50 include low magnetic permeability portions 42, 52 and high magnetic permeability portions 44, 54. The low magnetic permeability portions 42, 52 are disposed so as to face magnet materials 26a. Magnetic flux from the N pole of the permanent magnet 32 of the radial magnetizing part 30 enters a core 22 in the radial direction, crosses the magnet material 26a, and returns to the S pole of the permanent magnet 32. The magnetic flux from the N pole of the permanent magnet 32 of the radial magnetizing part 30 also enters the core 22 through the high magnetic permeability portions 44, 54 of the axial magnetizing parts 40, 50, crosses the magnet material 26a, and returns to the S pole of the permanent magnet 32.

## Description

### BACKGROUND OF THE INVENTION

### 1. Field of the Invention

The present invention relates to methods for manufacturing an interior permanent magnet (IPM) rotor unit and magnetizing devices.

### 2. Description of the Related Art

For example, Japanese Patent Application Publication No. 2014-121116 (JP 2014-121116 A) proposes magnetizing magnetic members for magnets (magnet materials) embedded in a rotor by disposing a magnetizing part serving as a source of a magnetic field so that the magnetizing part faces the outer peripheral surface of the rotor in the radial direction. Magnetic flux from the magnetizing part enters a core in the radial direction of the rotor, crosses the magnet material, and returns to the magnetizing part. The magnet material is magnetized in this manner.

The density of the magnetic flux entering the core from the magnetizing part tends to be higher in the region of the magnet material which is located close to the outer peripheral of the rotor and to be lower in the region of the magnet material which is located close to the rotation center of the rotor. Accordingly, the magnet material may not be able to be sufficiently magnetized, and performance of the rotor unit and performance of a motor using the rotor unit may not be sufficiently improved.

### SUMMARY OF THE INVENTION

It is one object of the present invention to provide a method for manufacturing an IPM rotor unit and a magnetizing device, which can improve performance of the rotor unit.

According to one aspect of the present invention, a method for manufacturing an interior permanent magnet rotor unit includes: magnetizing a magnet material filling a core of the rotor unit by using a magnetizing device to produce a permanent magnet. The rotor unit includes a plurality of the permanent magnets embedded in the core, a rotor is formed by the single rotor unit or by coupling a plurality of the rotor units in an axial direction, and the rotor is a component of an interior permanent magnet synchronous motor. The magnetizing device includes a radial magnetizing part that faces the core in a radial direction of the core, and an axial magnetizing part that faces the core in the axial direction of the core. A first magnetizing part, which is one of the radial magnetizing part and the axial magnetizing part, is a source of a magnetic field and is disposed in the magnetizing so that the radial magnetizing part faces the axial magnetizing part in the radial direction of the core or that the axial magnetizing part faces the radial magnetizing part in the axial direction of the core. In the magnetizing, the first magnetizing part applies the magnetic field toward the core to magnetize the magnet material. The first magnetizing part applies the magnetic field toward a second magnetizing part, which is the other of the radial magnetizing part and the axial magnetizing part, to apply the magnetic field to the magnet material via the second magnetizing part.

In the above aspect, the magnet material is magnetized by one of the following methods.
(a) The radial magnetizing part as the first magnetizing part applies the magnetic field to the core in the radial direction to magnetize the magnet material. Moreover, the radial magnetizing part applies the magnetic field toward the axial magnetizing part as the second magnetizing part to apply the magnetic field to the core via the axial magnetizing part, thereby magnetizing the magnet material. In other words, magnetic flux from the radial magnetizing part as the first magnetizing part enters the core in the radial direction to magnetize the magnet material in the radial direction, and the magnetic flux from the radial magnetizing portion enters the core in the axial direction via the axial magnetizing part as the second magnetizing part to magnetize the magnet material.
(b) The axial magnetizing part as the first magnetizing part applies the magnetic field to the core in the axial direction to magnetize the magnet material. Moreover, the axial magnetizing part applies the magnetic field toward the radial magnetizing part as the second magnetizing part to apply the magnetic field to the core via the radial magnetizing part, thereby magnetizing the magnet material. In other words, magnetic flux from the axial magnetizing part as the first magnetizing part enters the core in the axial direction to magnetize the magnet material, and the magnetic flux from the axial magnetizing portion enters the core in the radial direction via the radial magnetizing part as the second magnetizing part to magnetize the magnet material.

As described above, in the above aspect, the magnetic flux enters the core both in the radial and axial directions of the core. This can increase the density of the magnetic flux reaching the magnet material, and thus can improve performance of the rotor unit.

According to the method of the above aspect, a plurality of the magnet materials may be embedded at different positions in a circumferential direction of the core. The second magnetizing part may be formed by alternately arranging low magnetic permeability portions having lower magnetic permeability than the core and high magnetic permeability portions having higher magnetic permeability than the low magnetic permeability portions, and the low magnetic permeability portions may be disposed so as to face the magnet materials.

In the above aspect, the high magnetic permeability portion is disposed on both sides of the low magnetic permeability portion. This increases magnetic resistance of a magnetic path that travels from the first magnetizing part to one of the pair of high magnetic permeability portions having the low magnetic permeability portion therebetween, the low magnetic permeability portion, and the other high magnetic permeability portion, because the magnetic path includes the low magnetic permeability portion. This can increase the magnetic flux traveling in such a magnetic path that the magnetic flux bypasses the low magnetic permeability portion and passes through the core and the magnetic material. The number of low magnetic permeability portions may be equal to the number of the magnet materials.

According to the method of the above aspect, the high magnetic permeability portions may have higher magnetic permeability than the core. In this case, the magnetic flux more easily passes through the high magnetic permeability portions than through the core. The density of the magnetic flux can therefore be increased to some extent in the high magnetic permeability portion even in a region located away from the first magnetizing part. This makes it easy to increase the magnetic flux density in a part of the high magnetic permeability portion which faces a region where the density of the magnetic flux directly entering the core from the first magnetizing part is not sufficient, and thus can increase the density of the magnetic flux that is supplied via the high magnetic permeability portion to the region of the core which have the insufficient magnetic flux density. Accordingly, the first magnetizing part and the second magnetizing part can together increase the magnetization rate of the permanent magnet and improve performance of the rotor unit.

According to the method of the above aspect, the axial magnetizing part may include a pair of magnetizing parts that face both ends of the core in the axial direction.

In the above aspect, the axial magnetizing part is disposed at both ends of the core in the axial direction, so that the magnetic flux from the axial magnetizing part can enter both end faces of the core in the axial direction. This can increase the density of the magnetic flux entering the magnetic material, and can increase the magnetization rate of the permanent magnet.

According to the method of the above aspect, in the magnetizing, the magnetizing device may be disposed so that the radial magnetizing part extends to such a position in the axial direction of the core that a portion of the radial magnetizing part in the axial direction does not face the core and so that the portion faces the axial magnetizing part. The first magnetizing part may be the radial magnetizing part, and the second magnetizing part may be the axial magnetizing part.

In the above aspect, the magnetic flux from the radial magnetizing part as the first magnetizing part enters the core in the radial direction of the core to magnetize the magnet material in the radial direction. The magnet flux from the radial magnetizing part also enters the core via the axial magnetizing part as the second magnetizing part to magnetize the magnet material.

The method of the above aspect may further include: filling the core with the magnet material by introducing the magnet material caused to have fluidity into the core. In the magnetizing, the magnetizing device may be disposed so that the radial magnetizing part extends to such a position in the axial direction of the core that a portion of the radial magnetizing part in the axial direction does not face the core and so that the portion faces the axial magnetizing part. The first magnetizing part may be the radial magnetizing part, the second magnetizing part may be the axial magnetizing part, and the axial magnetizing part may have an inlet path through which the magnet material is introduced into the core. In the filling, the core may be filled with the magnet material via the inlet path. In the filling, the magnetic field from the first magnetizing part may be applied via the second magnetizing part to the magnet material flowing in the inlet path.

The method of the above aspect may further include: filling the core with the magnet material by introducing the magnet material caused to have fluidity into the core. In the magnetizing, the magnetizing device may be disposed so that the radial magnetizing part extends to such a position in the axial direction of the core that a portion of the radial magnetizing part in the axial direction does not face the core and so that the portion faces the axial magnetizing part. The first magnetizing part may be the radial magnetizing part, the second magnetizing part may be the axial magnetizing part, and the low magnetic permeability portion may include a low magnetic permeability member having lower magnetic permeability than the core, and a permanent magnet, and the low magnetic permeability member may have an inlet path through which the magnet material is introduced into the core. In the filling, the core may be filled with the magnet material via the inlet path. In the filling, the magnetic field from the first magnetizing part may be applied via the second magnetizing part to the magnet material flowing in the inlet path.

In the filling, the magnetic flux entering the second magnetizing part from the first magnetizing part crosses the magnetic material flowing in the inlet path. Easy magnetization directions of the magnet material are therefore oriented in the direction of the magnet flux, which can increase the orientation rate of the magnet material at the time the core is filled with the magnet material. This can increase saturated magnetization at the time the magnet material is magnetized in the magnetizing step, and can improve performance of the rotor unit.

According to another aspect of the present invention, a magnetizing device is used in the method of the above aspect, wherein,
the magnetizing device includes a radial magnetizing part that faces the core in a radial direction of the core, and an axial magnetizing part that faces the core in the axial direction of the core,
a first magnetizing part, which is one of the radial magnetizing part and the axial magnetizing part, is a source of a magnetic field and is disposed in the magnetizing so that the radial magnetizing part faces the axial magnetizing part in the radial direction of the core or that the axial magnetizing part faces the radial magnetizing part in the axial direction of the core,
in the magnetizing, the first magnetizing part applies the magnetic field toward the core to magnetize the magnet material, and
the first magnetizing part applies the magnetic field toward a second magnetizing part, which is the other of the radial magnetizing part and the axial magnetizing part, to apply the magnetic field to the magnet material via the second magnetizing part. This magnetizing device can improve performance of the rotor unit.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a perspective view showing the configuration of a rotor according to an embodiment of the present invention;
FIG. 2 is a plan view showing the planar structure of a rotor unit according to the embodiment;
FIG. 3 is a perspective view showing the configuration of a magnetizing device according to the embodiment;
FIG. 4 is a sectional view taken along line 4-4 in FIG. 3;
FIG. 5 is a sectional view taken along line 5-5 in FIG. 3;
FIG. 6 is a sectional view taken along line 6-6 in FIG. 5; and
FIG. 7 is a partial perspective view of an axial magnetizing part according to a modification of the embodiment.

### DETAILED DESCRIPTION OF EMBODIMENTS

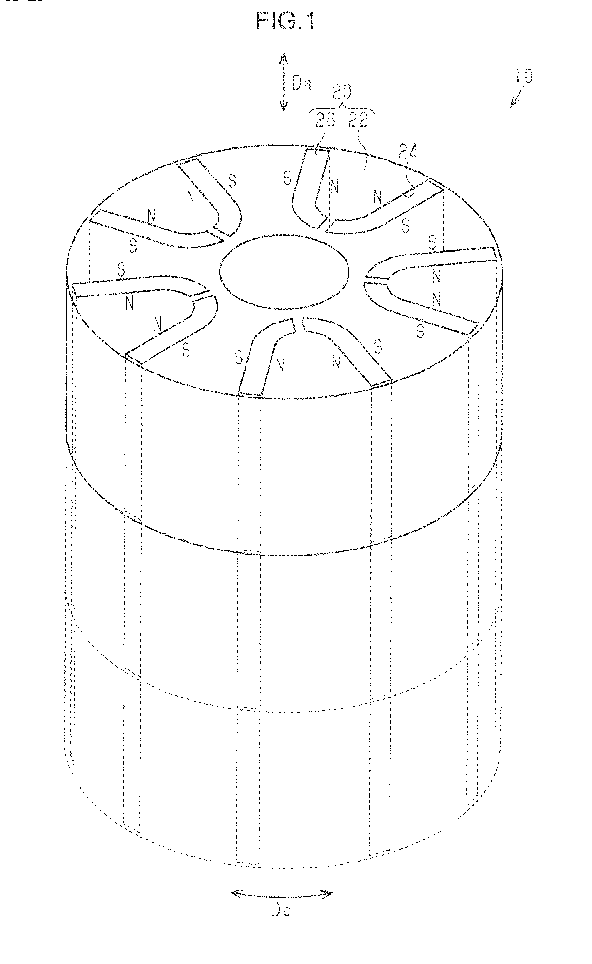

An embodiment of the present invention will be described below with reference to the accompanying drawings. A rotor 10 shown in FIG. 1 forms an interior permanent magnet synchronous motor (hereinafter referred to as "IPMSM"). The IPMSM is used for an electric power steering device (EPS). The rotor 10 has a cylindrical shape. The rotor 10 according to the present embodiment is formed by coupling three interior permanent magnet rotor units (rotor units 20) in the axial direction.

Each rotor unit 20 includes a core 22 and permanent magnets 26. The core 22 is formed by stacking a plurality of electromagnetic steel sheets. The core 22 has 10 insertion holes 24 extending therethrough in the axial direction Da of the rotor unit 20. Each insertion hole 24 has a substantially bisected U-shape in section perpendicular to the axial direction Da. That is, a pair of insertion holes 24 adjoining each other together form a substantially U-shape in section perpendicular to the axial direction Da. The permanent magnets 26 are embedded in the insertion holes 24. Bonded magnets as a mixture of magnetic particles and resin are used as a magnet material of the permanent magnets 26, and the permanent magnets 26 are produced by magnetizing the bonded magnets.

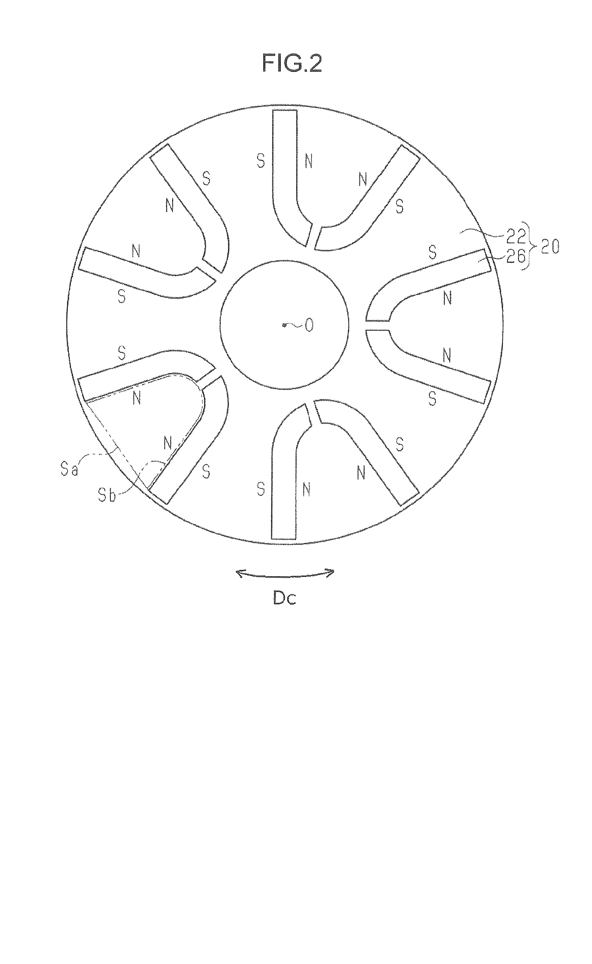

A method for manufacturing the rotor unit 20 will be described below. In the present embodiment, a source of a magnetic field is placed in the radial direction of the rotor unit 20 so that magnetic flux enters the core 22 in the radial direction. The magnetic flux in the radial direction is also induced to the end faces in the axial direction Da of the rotor unit 20 so that the magnetic flux enters the core 22 from the end faces in the axial direction Da of the rotor unit 20. A magnet material is magnetized in this manner. This is because performance of the rotor unit 20 cannot be sufficiently enhanced if the magnetic flux is caused to enter the core 22 only in the radial direction. Reasons why the performance of the rotor unit 20 cannot be sufficiently enhanced will be described below with reference to FIG. 2.

A first reason is that, if the source of the magnetic field is placed only in the radial direction to magnetize the magnet material, the outer peripheral side of the core 22 reaches magnetic saturation, and the rotation center O side of the core 22 has low magnetic flux density, whereby the magnet material cannot be sufficiently magnetized. A second reason is that, in the configuration in which the permanent magnets 26 are extended from the outer peripheral side to the rotation center O side of the core 22 so as to have an increased area as in the present embodiment, the area Sb through which the magnetic flux enters the magnet materials is larger than the area Sa through which the magnetic flux enters the core 22 (see FIG. 2), and the density of the magnetic flux entering the magnet materials is lower than that of the magnetic flux entering the core 22 due to continuity of magnetic flux lines. The density of magnetic flux that is generated by a source of a magnetic flux in a magnetizing device is sufficiently higher than an ideal magnetic flux density of the permanent magnet 26. However, saturation magnetization is greater than residual magnetization. Moreover, in the case where the area Sb is larger than the area Sa to some extent, the density of the magnetic flux entering the magnet material is not high enough. A third reason is that, in the case where the magnetic flux enters the core 22 in the radial direction, crosses the magnet material in the circumferential direction Dc, and leaves the core 22 in the radial direction, magnetic resistance is higher in the magnetic path crossing the rotation center O side of the magnet material than in the magnetic path crossing the outer peripheral side of the magnet material.

Insufficient density of the magnetic flux entering the magnet material results in a low orientation rate and a low magnetization rate of the permanent magnet 26 produced by magnetization, which affects the performance of the rotor unit 20. As used herein, the "orientation rate" refers to the degree to which the easy magnetization directions of magnetic particles match the direction perpendicular to the surface of the permanent magnet 26. If the orientation rate is low, the magnetic flux leaving the N pole and entering the S pole of the permanent magnet 26 produced by magnetization has lower density. In the present embodiment, the period of a filling step of filling the insertion holes 24 with the magnet material having fluidity overlaps the period of a magnetizing step. Accordingly, increasing the density of the magnetic flux entering the magnet material in the magnetizing step tends to increase the orientation rate. The magnetization rate is the degree to which the magnetic moment (magnetization direction) in a local area of magnetic particles forming the permanent magnet 26 matches one of the pair of easy magnetization directions. That is, even if the orientation rate is high, the magnetic flux leaving the N pole and entering the S pole of the permanent magnet 26 produced by magnetization has lower density if the degree to which the magnetic moment matches one of the pair of easy magnetization direction is low. The present embodiment aims to make residual magnetization after the magnetizing step closer to residual magnetization after magnetic saturation of the entire magnet material with a high orientation rate. This can increase the speed electromotive force coefficient of the IPMSM and can increase torque that is generated by the IPMSM when a current of a predetermined magnitude is applied thereto. In the present embodiment, the performance of the rotor unit 20 is defined by the magnitude of the torque that is generated by the IPMSM when a predetermined current is applied thereto. That is, the higher the performance is, the larger the torque that is generated when a predetermined current is applied.

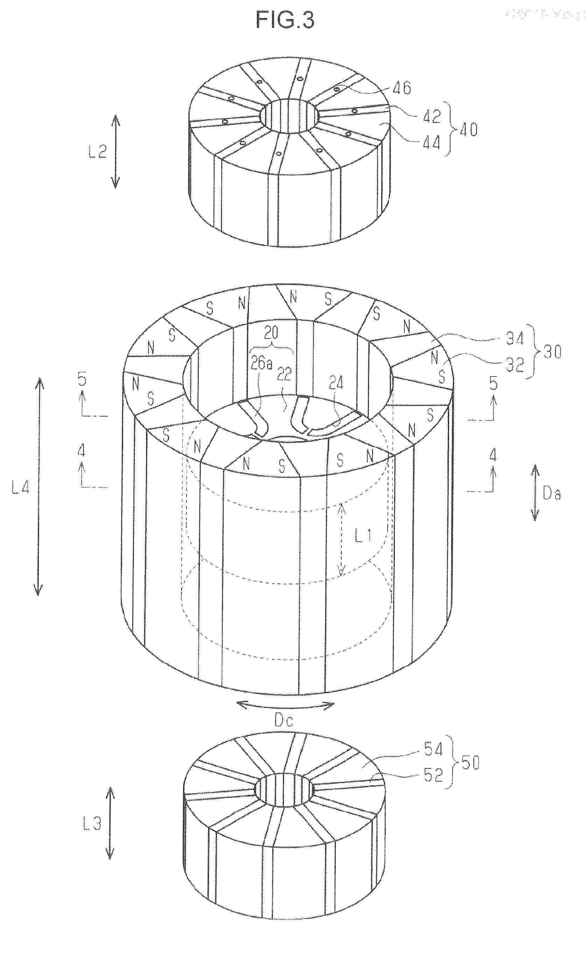

FIG. 3 shows the magnetizing device and the rotor unit 20 according to the present embodiment. FIG. 3 shows the state where each insertion hole 24 of the core 22 has been filled with a magnet material 26a. A radial magnetizing part 30 shown in FIG. 3 includes 10 permanent magnets 32 and 10 magnetizing yokes 34 which are alternately arranged in the circumferential direction Dc of the rotor unit 20. The permanent magnets 32 and the magnetizing yokes 34 are formed into a single-piece annular body by using a nonmagnetic member, not shown. The radial magnetizing part 30 is disposed so as to surround the core 22 and to face the core 22 with predetermined clearance between the radial magnetizing part 30 and the outer peripheral surface of the core 22.

The permanent magnets 32 are disposed radially outward of the core 22 so as to be located radially outward of the magnet materials 26a in the insertion holes 24 of the core 22. The width of each permanent magnet 32 in the circumferential direction Dc increases as closer to the outer periphery of the radial magnetizing part 30. Each permanent magnet 32 has different magnetic poles (S pole and N pole) on both sides in the circumferential direction Dc of the rotor unit 20. The permanent magnets 32 are arranged so that opposing ends in the circumferential direction Dc of two permanent magnets 32 adjoining each other in the circumferential direction Dc of the rotor unit 20 have the same magnetic pole (S-S or N-N). The magnetizing yoke 34 is interposed between the opposing circumferential ends of the adjoining permanent magnets 32 which have the same magnetic pole.

An axial magnetizing part 40 includes 10 low magnetic permeability portions 42 and 10 high magnetic permeability portions 44 which are alternately arranged in the circumferential direction Dc of the rotor unit 20. The low magnetic permeability portions 42 and the high magnetic permeability portions 44 are formed into a single-piece annular body by using a nonmagnetic member, not shown. The low magnetic permeability portions 42 are made of stainless steel, and the high magnetic permeability portions 44 are made of permalloy. The low magnetic permeability portions 42 therefore have lower magnetic permeability than the high magnetic permeability portions 44. In the present embodiment, the high magnetic permeability portions 44 have higher magnetic permeability than the core 22.

Each of the low magnetic permeability portions 42 has an inlet path (spool 46) that introduces the hot magnet material 26a caused to have fluidity into the insertion hole 24. The axial magnetizing part 40 is disposed so as to face one end face of the rotor unit 20 in the axial direction Da and to be in close contact with the one end face. Specifically, the axial magnetizing part 40 is disposed so that each of the low magnetic permeability portions 42 faces a corresponding one of the magnet materials 26a and each of the high magnetic permeability portions 44 faces the region of the core 22 which is interposed between a corresponding one of the pairs of adjoining magnet materials 26a.

Like the axial magnetizing part 40, an axial magnetizing part 50 include low magnetic permeability portions 52 and high magnetic permeability portions 54, and the low magnetic permeability portions 52 are disposed so as to face the magnet materials 26a. No spool is formed in the low magnetic permeability portions 52 of the axial magnetizing part 50.

The length L4 of the radial magnetizing part 30 in the axial direction Da is equal to or larger than the sum of the length L1 of the rotor unit 20 in the axial direction Da, the length L2 of the axial magnetizing part 40 in the axial direction Da, and the length L3 of the axial magnetizing part 50 in the axial direction Da. When the magnet materials 26a of the rotor unit 20 is magnetized, the axial magnetizing parts 40, 50 are disposed on both sides of the rotor unit 20 so as to face the rotor unit 20, and the radial magnetizing part 30 is disposed radially outward of the rotor unit 20 and the axial magnetizing parts 40, 50 so as to face the outer peripheral surfaces of the rotor unit 20 and the axial magnetizing parts 40, 50. At this time, one of the end faces of the axial magnetizing part 40 in the axial direction Da which does not face the rotor unit 20 is aligned with (i.e., is flush with) the end face of the radial magnetizing part 30 in the axial direction Da which is close to the magnetizing part 40, or is located on the rotor unit 20 side (i.e., is located inward) with respect to the end face of the radial magnetizing part 30 in the axial direction Da which is close to the axial magnetizing part 40. One of the end faces of the axial magnetizing part 50 in the axial direction Da which does not face the rotor unit 20 is aligned with (i.e., is flush with) the end face of the radial magnetizing part 30 in the axial direction Da which is close to the axial magnetizing part 50, or is located on the rotor unit 20 side (i.e., is located inward) with respect to the end face of the radial magnetizing part 30 in the axial direction Da which is close to the axial magnetizing part 50.

Functions of the present embodiment will be described below.

As described above, the filling step of filling the insertion holes 24 with the hot magnet material 26a caused to have fluidity through the spools 46 is performed after the radial magnetizing part 30 and the axial magnetizing parts 40, 50 are disposed so as to face the rotor unit 20.

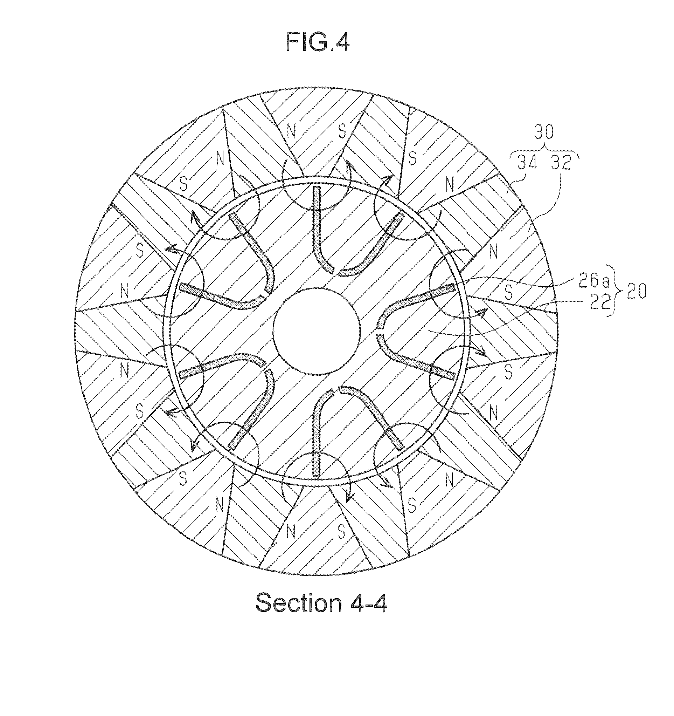

FIG. 4 shows a process of magnetizing the magnet materials 26a introduced into the insertion holes 24 in the filling step by using the radial magnetizing part 30. FIG. 4 is a sectional view taken along line 4-4 in FIG. 3. The radial magnetizing part 30 magnetizes the magnet materials 26a by applying a magnetic field to the core 22 in the radial direction. Namely, after leaving the N pole of each permanent magnet 32 of the radial magnetizing part 30, the magnetic flux enters the S pole of this permanent magnet 32 after traveling through the magnetizing yoke 34 adjoining the N pole of this permanent magnet 32, the core 22, the magnet material 26a, the core 22, and the magnetizing yoke 34 adjoining the S pole of this permanent magnet 32 in this order. The magnet materials 26a are thus magnetized in the radial direction by the radial magnetizing part 30.

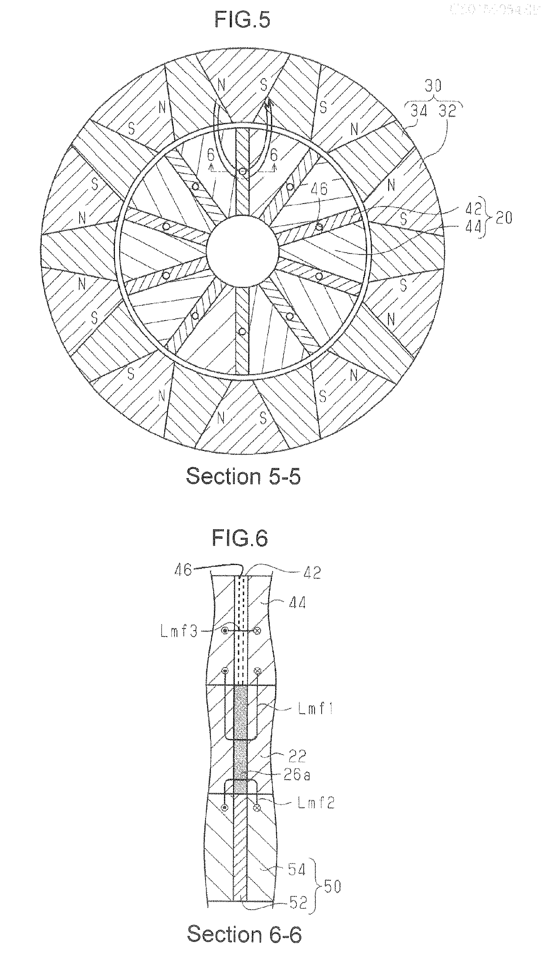

FIG. 5 shows a magnetizing process using both the axial magnetizing part 40 and the radial magnetizing part 30. FIG. 5 is a sectional view taken along line 5-5 in FIG. 3. FIG. 5 shows the state where the axial magnetizing part 40 is in place for magnetization.

The radial magnetizing part 30 applies a magnetic field toward the axial magnetizing part 40 to apply the magnetic field to the magnet materials 26a via the axial magnetizing part 40. That is, as shown in FIG. 5, a part of the magnetic flux that has left the N pole of each permanent magnet 32 enters a corresponding one of the high magnetic permeability portions 44 via the magnetizing yoke 34 adjoining the N pole of this permanent magnet 32, bypasses the low magnetic permeability portion 42, and enters the core 22 from the end face of the axial magnetizing part 40 in the axial direction Da. The magnetic flux bypassing the low magnetic permeability portion 42 is shown by a dashed line in FIG. 5.

FIG. 6 shows a line of magnetic force Lmf1 bypassing the low magnetic permeability portion 42 and entering the core 22. FIG. 6 is a sectional view taken along line 6-6 in FIG. 5. The magnetic flux that has entered the core 22 from the high magnetic permeability portion 44 crosses the magnet material 26a and enters another high magnetic permeability portion 44 via the core 22 adjoining the magnet material 26a. As shown in FIG. 5, the magnetic flux that has entered that other high magnetic permeability portion 44 enters the magnetizing yoke 34 and reaches the S pole of the permanent magnet 32. The magnetic flux bypasses the low magnetic permeability portion 42 because the low magnetic permeability portion 42 has lower magnetic permeability than the core 22.

Similarly, as shown in FIG. 6, a part of the magnetic flux from the radial magnetizing part 30 enters the core 22 via the axial magnetizing part 50 to magnetize the magnet material 26a. This magnetic flux is shown by a line of magnetic force Lmf2 in FIG. 6.

The magnetic flux that enters the core 22 via the axial magnetizing parts 40, 50 tends to reach the rotation center O side of the magnet material 26a in the radial direction, as compared to the magnetic flux of the radial magnetizing part 30 which enters the core 22 in the radial direction. One reason for this is that the high magnetic permeability portions 44, 54 have higher magnetic permeability than the core 22. That is, in the case where the high magnetic permeability portions 44, 54 have higher magnetic permeability than the core 22 and the high magnetic permeability portions 44, 54 do not reach magnetic saturation, the magnetic flux that reaches the rotation center O side of the high magnetic permeability portions 44, 54 has high density. That is, the density of the magnetic flux that reaches the rotation center O side of the magnet material 26a via the axial magnetizing parts 40, 50 is higher than that of the magnetic flux that enters the core 22 directly from the radial magnetizing part 30 and reaches the rotation center O side of the magnet material 26a. The use of the axial magnetizing parts 40, 50 can therefore increase the magnetization rate of the rotation center O side of the magnet material 26a. Moreover, after the insertion holes 24 are filled with the magnet materials 26a, the magnetic flux crosses the magnet materials 26a while the magnet materials 26a still has fluidity. This can increase the orientation rate of the permanent magnets 26.

As shown in FIGS. 5 and 6, a part of the magnetic flux that has entered the axial magnetizing part 40 from the radial magnetizing part 30 crosses the low magnetic permeability portion 42 and enters the S pole of the permanent magnet 32 via the high magnetic permeability portion 44 and the magnetizing yoke 34. In this case, the magnetic flux crosses the magnet material 26a flowing in the spool 46. The magnet material 26a flowing in the spool 46 has higher fluidity than the magnet material 26a in the insertion hole 24. The magnetic flux crossing the magnet material 26a flowing in the spool 46 therefore facilitates orientation of the magnet material 26a. The orientation rate of the permanent magnet 26 can therefore be improved.

In the present embodiment, since the fluidity of the magnet materials 26a is not so high, such a phenomenon is observed that the insertion holes 24 are filled with the magnet materials 26a from the axial magnetizing part 40 side. Accordingly, the easy magnetizing directions of the magnet materials 26a filling the insertion holes 24 are less likely to be oriented undesirably or randomly, as compared to the case where the fluidity of the magnet materials 26a is too high that the magnet materials 26a rapidly drop to the axial magnetizing part 50 side of the insertion holes 24. Therefore, the orientation direction of the magnet material 26a oriented in the spool 46 does not significantly vary from the direction connecting the S pole and the N pole of the permanent magnet 26 even after the magnet material 26a is introduced into the insertion hole 24. The orientation rate of the permanent magnet 26 can thus be increased by orienting the magnet material 26a in the spool 46. The fluidity of the magnet material 26a is adjusted by the mixing ratio of resin to magnetic particles in the magnet material 26a.

The present embodiment has the following functions and effects in addition to the effects described above.
(1) The magnetic flux from the radial magnetizing part 30 enters the core 22 directly and via the axial magnetizing parts 40, 50. This can increase the total amount of magnetic flux that reaches the magnet materials 26a, and can improve the performance of the rotor unit 20.
(2) The axial magnetizing parts 40, 50 have the low magnetic permeability portions 42, 52 and the high magnetic permeability portions 44, 54. This allows the magnetic flux that has entered the high magnetic permeability portions 44, 54 in the radial direction to bypass the low magnetic permeability portions 42, 52 and enter the core 22 in the axial direction Da.
(3) The high magnetic permeability portions 44, 54 have higher magnetic permeability than the core 22. The density of the magnetic flux reaching the rotation center O side of the core 22 via the axial magnetizing parts 40, 50 from the radial magnetizing part 30 can be made higher than that of the magnetic flux reaching the rotation center O side of the core 22 directly from the radial magnetizing part 30.
(4) The axial magnetizing parts 40, 50 are disposed so as to face the end faces of the rotor unit 20 in the axial direction Da. This can suppress variation in density of the magnetic flux crossing the magnet material 26a depending on the position in the axial direction Da, as compared to the case of using only one of the axial magnetizing parts 40,50.
(5) The rotor unit 20 is applied to an IPMSM used for EPSs. IPMSMs used for EPSs tend to have a large number of pole pairs. It is therefore difficult to increase the area Sa shown in FIG. 2, and the magnetization rate tends to be low in the case where the magnetization process is performed by using only the radial magnetizing part 30. It is therefore significantly advantageous to use the axial magnetizing parts 40, 50.

The above embodiment may be modified as follows. In the above embodiment, the low magnetic permeability portions 42 of the axial magnetizing part 40 have a rectangular shape in section perpendicular to the radial direction (see FIG. 3). However, embodiments of the present invention are not limited to this. For example, the low magnetic permeability portions 42 may have a trapezoidal shape in section perpendicular to the radial direction of the axial magnetizing part 40. In this case, for example, the thickness in the circumferential direction Dc of the low magnetic permeability portion 42 that is disposed to face the magnet material 26a may be increased as farther away from the magnet material 26a. That is, the low magnetic permeability portion 42 may have a trapezoidal shape having a larger upper base and a smaller lower base in section perpendicular to the radial direction of the axial magnetizing part 40. This makes it easier for the magnetic flux that has entered the high magnetic permeability portion 44 in the radial direction to travel toward the core 22. Alternatively, the thickness in the circumferential direction Dc of the low magnetic permeability portion 42 may be reduced as farther away from the magnet material 26a. That is, the low magnetic permeability portion 42 may have a trapezoidal shape having a smaller upper base and a larger lower base in section perpendicular to the radial direction of the axial magnetizing part 40. This can increase the density of the magnetic flux crossing the magnet material 26a in the spool 46.

The low magnetic permeability portions 52 of the axial magnetizing part 50 have a rectangular shape in section perpendicular to the radial direction. However, the present invention is not limited to this. The low magnetic permeability portions 52 may have a trapezoidal shape in section perpendicular to the radial direction. In this case, for example, the thickness in the circumferential direction Dc of the low magnetic permeability portion 52 that is disposed to face the magnet material 26a may be increased as farther away from the magnet material 26a. This makes it easier for the magnetic flux that has entered the high magnetic permeability portion 54 in the radial direction to travel toward the core 22.

In the above embodiment, the high magnetic permeability portions 44 are made of permalloy. However, embodiments of the present invention are not limited to this. For example, the high magnetic permeability portions 44 may be made of ferrite. In order to increase the density of the magnetic flux that enters the rotation center O side of the core 22 via the axial magnetizing parts 40, 50, it is desirable to use a material having higher magnetic permeability than the core 22 as the material of the high magnetic permeability portions.

In the above embodiment, the low magnetic permeability portions 42 are made of stainless steel. However, embodiments of the present invention are not limited to this. For example, the low magnetic permeability portions 42 may be made of aluminum or may be made of copper. The low magnetic permeability portions 42 may be made of any resin capable of withstanding heat from the bonded magnets caused to have fluidity.

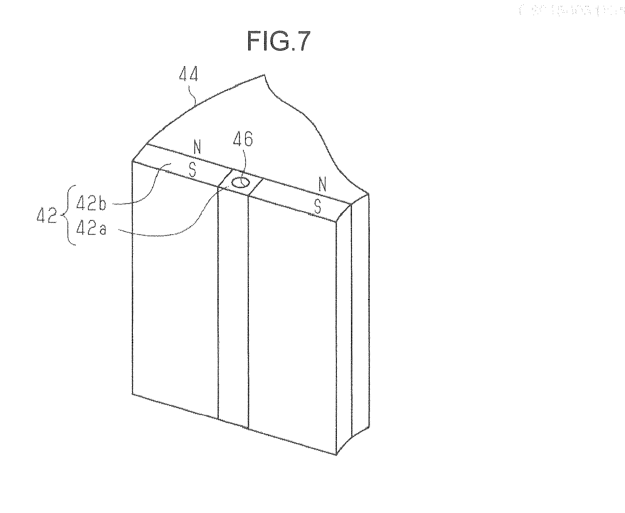

In the above embodiment, the axial magnetizing parts 40, 50 do not have a source of a magnetic field. However, embodiments of the present invention are not limited to this. For example, as shown in FIG. 7, the low magnetic permeability portion 42 may be formed by a permanent magnet 42b and a non-magnet member 42a. The non-magnet member 42a has a through hole, and this through hole serves as the spool 46. The material of the non-magnet member 42a is similar to that of the above embodiment.

With this configuration, the low magnetic permeability portion 42 other than the region forming the spool 46 is formed by the permanent magnet 42b as much as possible. This can reduce the density of the magnetic flux returning to the radial magnetizing part 30 without traveling through the rotor unit 20 after entering the axial magnetizing parts 40, 50 from the radial magnetizing part 30. Since the magnetic flux of the permanent magnet 42b also enters the rotor unit 20, the magnetization rate of the magnet material 26a can further be increased.

In FIG. 7, the permanent magnet 42b may be replaced with a non-magnet member having lower magnetic permeability than the non-magnet member 42a. This can reduce the density of the magnetic flux returning to the radial magnetizing part 30 without traveling through the rotor unit 20, as the magnetic flux from the radial magnetizing part 30 crosses this non-magnet member.

The low magnetic permeability portion 52 of the axial magnetizing part 50 need not necessarily be made of the same material as the low magnetic permeability portion 42 of the axial magnetizing part 40. It is desirable that the low magnetic permeability portion 52 be made of a material having lower magnetic permeability than the low magnetic permeability portion 42 having the spool 46.

The present invention is not limited to the axial magnetizing part 40 having the spools 46. Even if the axial magnetizing part 40 do not have the spools 46, performing a magnetizing process using the radial magnetizing part 30 and the axial magnetizing parts 40, 50 after filling the insertion holes 24 with the magnet material 26a can increase the magnetization rate of the permanent magnet 26 as compared to the case of using only the radial magnetizing part 30.

In the above embodiment, the length L4 of the radial magnetizing part 30 in the axial direction Da is equal to or larger than the sum of the length L1 of the rotor unit 20 in the axial direction Da, the length L2 of the axial magnetizing part 40 in the axial direction Da, and the length L3 of the axial magnetizing part 50 in the axial direction Da. However, the present invention is not limited to this. For example, the length L4 may be smaller than the sum of the lengths L1, L2, and L3 and larger than the length L1 of the rotor unit 20 in the axial direction Da. In the case where the magnetizing device includes only one of the axial magnetizing parts 40, 50, the length L4 of the radial magnetizing part 30 in the axial direction Da may be slightly smaller than the length L1 of the rotor unit 20 in the axial direction Da. In this case, the radial magnetizing part 30 is disposed so that a portion of the radial magnetizing part 30 in the axial direction Da does not face the rotor unit 20. The one of the axial magnetizing parts 40, 50 can thus be disposed to face this portion of the radial magnetizing part 30.

The shape of the permanent magnet 32 is not limited to that described in the above embodiment. For example, the permanent magnet 32 may be shaped to have the same length in the circumferential direction Dc regardless of the position in the radial direction. The radial magnetizing part 30 includes the permanent magnets 32 in the above embodiment. However, the present invention is not limited to this, and the radial magnetizing part 30 may include an electromagnet.

In the above embodiment, the first magnetizing part of the present invention corresponds to the radial magnetizing part 30, the second magnetizing part of the present invention corresponds to the axial magnetizing parts 40, 50, and the magnetic flux from the radial magnetizing part 30 is induced to the magnet materials 26a of the rotor unit 20 via the axial magnetizing parts 40, 50. However, embodiments of the present invention are not limited to this. For example, the first magnetizing part may be the axial magnetizing parts 40, 50, and the second magnetizing part may be the radial magnetizing part 30, so that the magnetic flux from the axial magnetizing parts 40, 50 is induced to the magnet materials 26a of the rotor unit 20 via the radial magnetizing part 30. This can be implemented by making the length L4 of the radial magnetizing part 30 in the axial direction Da about the same as the length L1 of the rotor unit 20 in the axial direction Da, and making the diameter of the axial magnetizing parts 40, 50 about the same as that of the radial magnetizing part 30. In this case, the axial magnetizing parts 40, 50 are configured to have a source of a magnetic field such as a permanent magnet, and the radial magnetizing part 30 is formed by alternately arranging low magnetic permeability portions and high magnetic permeability portions. The low magnetic permeability portions can thus be disposed to face the magnet materials 26a in the radial direction, and functions and effects similar to those of the above embodiment can be obtained.

In the above embodiment, the magnetizing device includes the pair of axial magnetizing parts 40, 50. However, embodiments of the present invention are not limited to this. For example, the magnetizing device may include only the axial magnetizing part 40, or may include only the axial magnetizing part 50. In this case, it is desirable to use only the axial magnetizing part including the spools 46 in order to increase the orientation rate.

In FIG. 1, the permanent magnets 26 contained in each rotor unit 20 are disposed in the same phase in the circumferential direction Dc of the core 22. However, embodiments of the present invention are not limited to this. For example, in FIG. 1, the permanent magnets 26 of the rotor unit 20 located in the middle may be slightly shifted to the left in the circumferential direction Dc with respect to the permanent magnets 26 of the uppermost rotor unit 20, and the permanent magnets 26 of the lowermost rotor unit 20 may be slightly shifted to the left in the circumferential direction Dc with respect to the permanent magnets 26 of the rotor unit 20 in the middle.

The number of rotor units 20 in the rotor 10 is not limited to three. For example, the number of rotor units 20 may be two, or may be four or more. The rotor 10 may be formed by a single rotor unit 20.

The shape of the permanent magnet 26 is not limited to the bisected U-shape. The permanent magnet 26 may have a non-divided U-shape, or may have a V-shape, the shape of a spoke, etc. In the above embodiment, the axial magnetizing parts 40, 50 are disposed so as to face the rotor unit 20 in close contact therewith in the axial direction Da. However, the axial magnetizing parts 40, 50 may be disposed so as to face the rotor unit 20 in the axial direction Da with predetermined clearance therebetween. In order to suppress leakage of the magnet materials 26a from the insertion holes 24, it is desirable that the axial magnetizing parts 40, 50 be disposed so as to face the rotor unit 20 in close contact therewith.

The core 22 is not limited to the stacked structure of electromagnetic steel sheets. For example, the core 22 may be a single-piece component made of a ferrite material or may be a powder magnetic core. The magnet material 26a is not limited to the bonded magnet. For example, the magnet material 26a may be a sintered magnet. In this case, at the time sintered magnets are placed in the core 22, the easy magnetization directions of each magnetic domain are parallel to each other, and the orientation rate is high. The orientation rate hardly changes in the magnetizing step using the radial magnetizing part 30 and the axial magnetizing parts 40, 50. In this case as well, it is effective to adjust the shape or the mixing ratio of the permanent magnet 26 as in the first embodiment in order to increase the magnetization rate.

The IPMSM is not limited to the IPMSM used for EPSs. For example, the IPMSM may be an IPMSM that is used for variable gear ratio steering (VGRS) systems. The IPMSM is not limited to the IPMSM that is used for an actuator for steering a steered wheel. It is also effective to use IPMSMs of other applications together with the axial magnetizing parts 40, 50 if the magnetization rate and the orientation rate cannot be sufficiently increased by the magnetizing process using only the radial magnetizing part 30.

## Claims

1. A method for manufacturing an interior permanent magnet rotor unit, comprising:
magnetizing a magnet material filling a core of the rotor unit by using a magnetizing device to produce a permanent magnet, wherein,
the rotor unit includes a plurality of the permanent magnets embedded in the core, a rotor is formed by the single rotor unit or by coupling a plurality of the rotor units in an axial direction, and the rotor is a component of an interior permanent magnet synchronous motor, wherein,
the magnetizing device includes a radial magnetizing part that faces the core in a radial direction of the core, and an axial magnetizing part that faces the core in the axial direction of the core,
a first magnetizing part, which is one of the radial magnetizing part and the axial magnetizing part, is a source of a magnetic field and is disposed in the magnetizing so that the radial magnetizing part faces the axial magnetizing part in the radial direction of the core or that the axial magnetizing part faces the radial magnetizing part in the axial direction of the core,
in the magnetizing, the first magnetizing part applies the magnetic field toward the core to magnetize the magnet material, and
the first magnetizing part applies the magnetic field toward a second magnetizing part, which is the other of the radial magnetizing part and the axial magnetizing part, to apply the magnetic field to the magnet material via the second magnetizing part.

2. The method according to claim 1, wherein,
a plurality of the magnet materials are embedded at different positions in a circumferential direction of the core,
the second magnetizing part is formed by alternately arranging low magnetic permeability portions having lower magnetic permeability than the core and high magnetic permeability portions having higher magnetic permeability than the low magnetic permeability portions, and
the low magnetic permeability portions are disposed so as to face the magnet materials.

3. The method according to claim 2, wherein,
the high magnetic permeability portions have higher magnetic permeability than the core.

4. The method according to any one of claims 1 to 3, wherein,
the axial magnetizing part includes a pair of magnetizing parts that face both ends of the core in the axial direction.

5. The method according to any one of claims 1 to 4, wherein,
in the magnetizing, the magnetizing device is disposed so that the radial magnetizing part extends to such a position in the axial direction of the core that a portion of the radial magnetizing part in the axial direction does not face the core and so that the portion faces the axial magnetizing part,
the first magnetizing part is the radial magnetizing part, and
the second magnetizing part is the axial magnetizing part.

6. The method according to claim 2 or 3, further comprising:
filling the core with the magnet material by introducing the magnet material caused to have fluidity into the core, wherein,
in the magnetizing, the magnetizing device is disposed so that the radial magnetizing part extends to such a position in the axial direction of the core that a portion of the radial magnetizing part in the axial direction does not face the core and so that the portion faces the axial magnetizing part,
the first magnetizing part is the radial magnetizing part,
the second magnetizing part is the axial magnetizing part, and
the axial magnetizing part has an inlet path through which the magnet material is introduced into the core, wherein,
in the filling, the core is filled with the magnet material via the inlet path, and
in the filling, the magnetic field from the first magnetizing part is applied via the second magnetizing part to the magnet material flowing in the inlet path.

7. The method according to claim 2 or 3, further comprising:
filling the core with the magnet material by introducing the magnet material caused to have fluidity into the core, wherein,
in the magnetizing, the magnetizing device is disposed so that the radial magnetizing part extends to such a position in the axial direction of the core that a portion of the radial magnetizing part in the axial direction does not face the core and so that the portion faces the axial magnetizing part,
the first magnetizing part is the radial magnetizing part,
the second magnetizing part is the axial magnetizing part, and
the low magnetic permeability portion includes a low magnetic permeability member having lower magnetic permeability than the core, and a permanent magnet, and the low magnetic permeability member has an inlet path through which the magnet material is introduced into the core, wherein,
in the filling, the core is filled with the magnet material via the inlet path, and
in the filling, the magnetic field from the first magnetizing part is applied via the second magnetizing part to the magnet material flowing in the inlet path.

8. A magnetizing device that is used in the method according to any one of claims 1 to 6, wherein,
the magnetizing device includes a radial magnetizing part that faces the core in a radial direction of the core, and an axial magnetizing part that faces the core in the axial direction of the core,
a first magnetizing part, which is one of the radial magnetizing part and the axial magnetizing part, is a source of a magnetic field and is disposed in the magnetizing so that the radial magnetizing part faces the axial magnetizing part in the radial direction of the core or that the axial magnetizing part faces the radial magnetizing part in the axial direction of the core,
in the magnetizing, the first magnetizing part applies the magnetic field toward the core to magnetize the magnet material, and
the first magnetizing part applies the magnetic field toward a second magnetizing part, which is the other of the radial magnetizing part and the axial magnetizing part, to apply the magnetic field to the magnet material via the second magnetizing part.
